## Europäisches Patentamt
## European Patent Office
## Office européen des brevets

(11) Publication number: **0 119 573**
A1

## EUROPEAN PATENT APPLICATION

(21) Application number: **84102658.6**

(22) Date of filing: **12.03.84**

(51) Int. Cl.³: **C 12 M 1/26,** B 01 L 3/02, G 01 N 1/00, G 01 F 11/08

(30) Priority: **21.03.83 US 477329**

(43) Date of publication of application: **26.09.84** Bulletin **84/39**

(84) Designated Contracting States: **DE FR GB IT SE**

(71) Applicant: **MILES LABORATORIES, INC., 1127 Myrtle Street, Elkhart Indiana 46514 (US)**

(72) Inventor: **Johnson, Leighton C., deceased (US)**

(74) Representative: **Adrian, Albert, Dr. et al, c/o BAYER AG Konzernverwaltung RP Patentabteilung, D-5090 Leverkusen 1, Bayerwerk (DE)**

(54) **Microdroplet dispensing apparatus and method.**

(57) A microdroplet dispensing apparatus and method useful in biochemical applications are disclosed. The apparatus incorporates a disposable pump element adapted to be removably mounted in operative position and providing a receptacle for the liquid to be dispensed, as well as a restricted orifice through which such liquid is dispensed. The apparatus has actuating means cooperable with the pump element when the latter is in operative position, but which is not exposed to the liquid dispensed. Also provided is means for mounting a petri dish or other target member in a position to receive microdroplets of liquid dispensed from the restricted orifice, such mounting means providing for selective movement of the petri dish along coplanar linear paths normal to each other. A modified form of apparatus provides for the removable mounting of a plurality of pump elements on a rotary table-type support. The apparatus makes possible a variety of different biochemical methods heretofore not possible and which can involve dispensing of a variety of different liquids in a variety of different microquantities.

Application of:  Leighton C. Johnson
For           :  Microdroplet Dispensing Apparatus and Method
Docket No.    :  MS-1281


## BACKGROUND OF THE INVENTION

This invention relates in general to the field of biochemistry and more particularly to an improved apparatus useful in biochemical applications for dispensing microdroplets of liquid reagent, specimen, inoculant, or other liquid.

Apparatus capable of directing micro quantities of liquid ejected from an orifice toward a precise impact point on a target member spaced several centimeters away from the orifice has been developed in the ink jet printing art. A review of ink jet printing developments entitled "The Quiet Revolution in Ink Jet Printing", by Dr. E.V.W. Zschau can be found in the September 1978 issue of Digital Design, page 22 et seq. Kyser et al U.S. Patent No. 4,216,483 issued August 5, 1980 and Christou U.S. Patent No. 4,131,899 issued December 26, 1978 disclose examples of the drop-on-demand type of ink jet printing apparatus.

While the apparatus developed in the ink jet printing art is capable of ejecting micro droplets of ink, such apparatus is costly and does not lend itself to biochemical applications requiring dispensing of microquantities of liquid reagent, inoculant or specimen. Prior art jet printing apparatus is designed for use with a single liquid, i.e., ink, whereas biochemical applications may require a multitude of liquids to be sequentially dispensed. For example, the liquid to be dispensed may variously be sterile, pathogenic or have other characteristics which make impractical the use of prior art jet printing apparatus for the dispensing thereof in microdroplet quantities.

MS-1281

## SUMMARY OF THE INVENTION

The apparatus of the present invention is particularly well adapted for use in biochemical applications by virtue of the incorporation therein of a removably mounted disposable pump element providing a receptacle for the liquid to be dispensed. The pump element can conveniently function as a sample handling container for a liquid specimen to be dispensed therefrom, such as a sample of urine, serum, or blood. Alternatively, the pump element can be marketed with a selected liquid to be dispensed therefrom, such as a liquid reagent or inoculant, prepackaged therein and ready for use.

The pump element is a low cost item which is disposed of after use, and the apparatus has actuating means cooperable with the pump element when the latter is placed in operative position, but which does not come in contact with the liquid being dispensed.

The apparatus is provided with means for mounting a receptacle or target member, such as a petri dish or other target member, for movement along linear coplanar paths normal to each other. This permits, for example, inoculation of discrete surface portions of an agar medium in a petri dish with preselected microquantities of liquid reagent, inoculant or specimen. This is done by dispensing onto each such surface portion the number of microdroplets of the liquid required to provide the quantity thereof preselected for the respective surface portion.

The apparatus is adapted for use with a variety of biochemical methods which can involve dispensing of a variety of different liquids in a variety of different microquantities, depending upon the method practiced.

MS-1281

## BRIEF DESCRIPTION OF THE DRAWING

Figure 1 is an isometric perspective view of the presently preferred form of micro droplet dispenser constructed in accordance with the present invention.

Figure 2 is an enlargement of a portion of Figure 1 with parts broken away and shown in section.

Figure 3 is a block diagram illustrating typical electrical circuitry for energization of the solenoid in Figures 1 and 2.

Figure 4 is an enlarged fragmentary vertical sectional view of a portion of the pump element of Figures 1 and 2 illustrating impactual deformation of the deformable wall portion thereof by the pump engaging portion of the pump actuating means.

Figure 5, A through F, is a series of fragmentary vertical sectional views on an enlarged scale taken through the outlet orifice member of the pump element and illustrating the formation and dispensing of a microdroplet of liquid.

Figure 6 is an isometric perspective view of a modified form of pump element useful in the micro-droplet dispenser of the present invention.

Figure 7 is a view similar to Figure 6 showing the modified form of pump element in operative position on a portion of the dispenser of Figure 1 and in vertical section taken along the line VII-VII Figure 3.

Figure 8 is a fragmentary isometic perspective view of a modified form of micro droplet dispenser constructed in accordance with the invention.

## DESCRIPTION OF THE PREFERRED EMBODIMENT

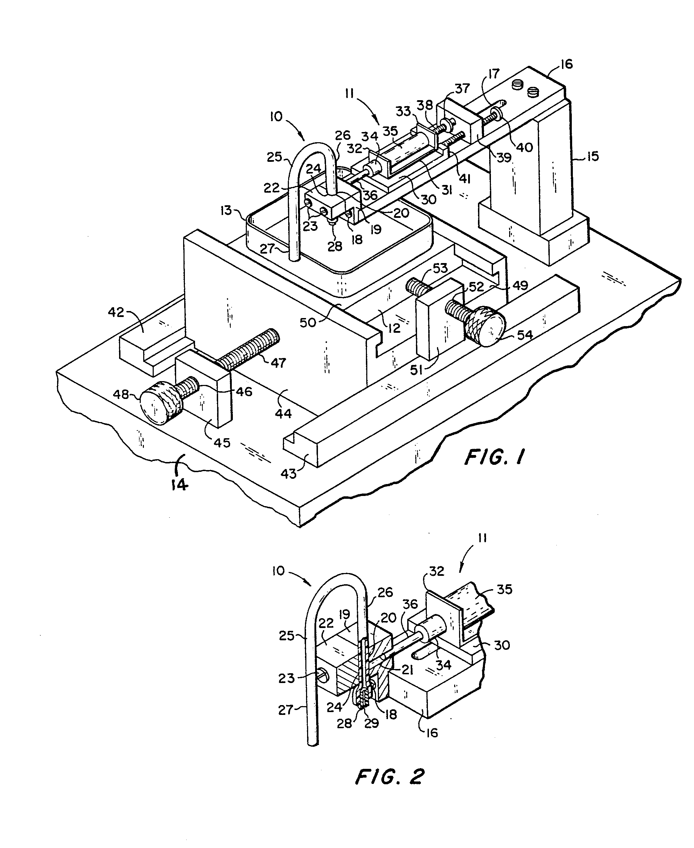

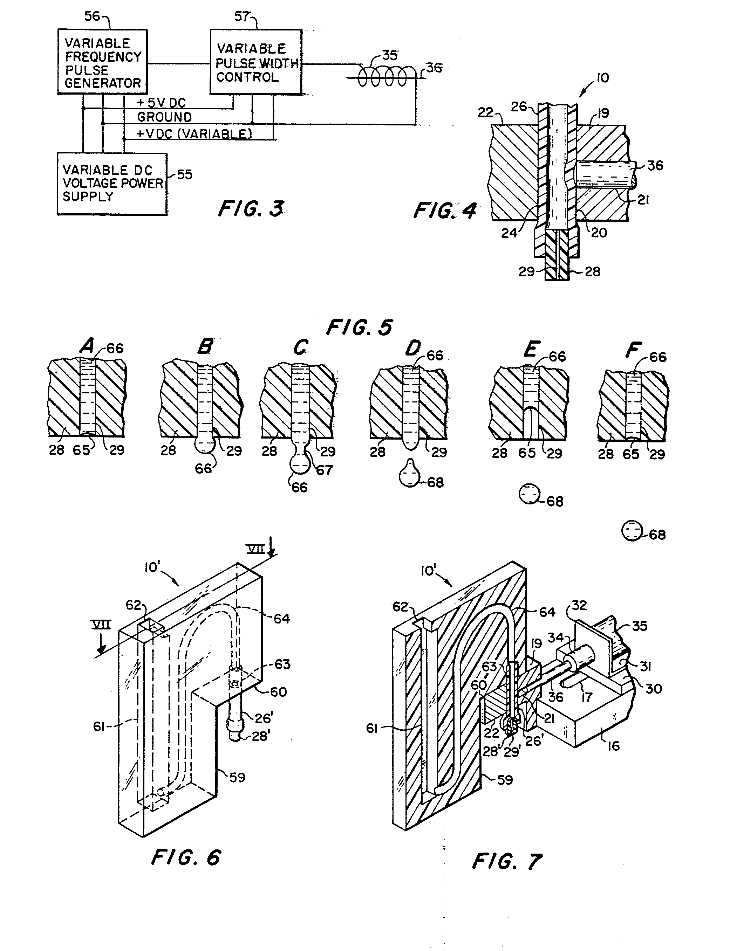

Referring now to Figure 1 of the drawing, the major elements of the microdroplet dispenser illustrated therein are a removably mounted pump element 10, pump actuating means 11, and movable mounting means 12 for a petri dish or other target member 13.  The dispenser of Figure 1 is provided with a base member 14 having a generally planar upper surface and on which is mounted an upstanding vertical support member 15.  Suitably fixed at one end to the upper end of the support member 15 is a cantilevered horizontal supporting bar 16 which is formed with a longitudinally extending slot 17.  Fixed to the other end of the bar 16, as by screws 18, is a clamp body member 19 formed in its outer vertical face with a vertical semicylindrical goove 20, best shown in Figure 4.  The member 19 is also formed with a horizontal bore 21 which radially intersects the semicylindrical groove 20 as shown in Figures 2 and 4. Cooperating with the clamp body member 19 is a clamping member 22 which is removably fixed thereto, as by screws 23. The inner vertical face of the clamping member 22 is formed with a vertical semicylindrical groove 24 which is complemental to the semicylindrical groove 20 in the clamp body 19.

The pump element 10 shown in Figures 1 and 2 comprises a generally U-shaped main body member 25 having generally vertically extending legs 26 and 27.  The pump element 10 is held in the operative position shown by virtue of the leg 26 extending through the cylindrical bore formed by the comple mental semicylindrical grooves 20 and 24 in clamp body 19 and clamping member 22, respectively.  The leg 26 is clamped adjacent its lower end, and a minor portion thereof projects below the clamp body 19 and clamping member 22 as shown. Telescopically fitted within the lower end of the leg 26 is a cylindrical outlet orifice member 28 formed with a restricted coaxial bore or outlet orifice 29.

The pump element 10 is provided with a deformable resilient wall portion which, in the form of the invention illustrated in Figures 1 and 3, is provided in the portion of the leg 26 clamped between the clamp body 19 and clamping member 22.  In Figures 1 and 2 the illustrated member 25

MS-1281

is formed of an extent of resilient deformable tubing, for example, tubing made of organoplastic material such as plasticized polyvinyl cloride tubing; however, it will be understood that the portions of the member 25 not clamped between the clamp body 19 and clamping member 22 can be formed of rigid material, for example rigid organoplastic, glass or other suitable material.

One form of pump element 10 which has been found to work satisfactorily has a main body member 25 formed of a length of plasticised polyvinyl cloride tubing in the U-shaped configuration illustrated in Figures 1 and 2. The tubing used in member 25 was Tygon $\textregistered$ formulation R-3603 available from the Norton Company, Worcester, Mass. 10606. This tubing has a nominal inside diameter of .0625 inch and a nominal outside diameter of .125 inch. The outlet orifice member 28 is formed of a cylindrical extent of Tygon $\textregistered$ vinyl tubing manufactured by the Norton Company for Technicon Corporation, Tarrytown, Y.Y. 10591 and is available from the latter as Part No. 116-0536-01. The member 28 has a length of .187 inch, an outside diameter of .072 inch, and a bore or restricted outlet orifice 29 having a diameter of .0025 to .007 inch. The outlet orifice member 28 is telescopically press-fitted within the lower end of the leg 26 of main body member 25; however, it will be understood that any other suitable means for connecting the member 28 to the lower end of the leg 26 may be utilized to join the member 28 to said leg.

In the form of the invention illustrated in Figures 1 and 2, the pump actuating means 11 takes the form of an electromagnetic solenoid assembly. More specifically, an adjustably mounted base plate or carriage member 30 is carried by and suitably secured to the horizontal supporting bar 16, for example by a pair of screws (not shown) which extend from the underside of the bar 16 through the slot 17 and are threaded into the carriage member 30. A generally

MS-1281

U-shaped metal frame member 31 is fixedly mounted on carriage member 30 and has spaced parallel upstanding flange portions 32 and 33, the flange 32 being apertured to receive a horizontally extending sleeve bearing 34 press-fitted therein. A solenoid coil 35 is interposed between the flanges 32 and 33 coaxially with the sleeve bearing 34, and a solenoid armature or pump element engaging member 36 extends through the coil 35 and sleeve bearing 34 and also projects outwardly through an aperture (not shown) in the flange 33. As best shown in Figure 2, the armature 36 is cylindrical in shape and at its forward end slidably extends into the horizontal bore 21 in the clamp body member 19. Adjacent it rear end the armature 36 has a washer 37 fixed thereon, and a helical compression spring 38 surrounds the armature 36, abutting the flange 33 at one end and the washer 37 at its other end. Thus, the spring 38 biases the armature 36 rearwardly, i.e., toward the right, as viewed in Figures 1 and 2.

An adjustably mounted stop member 39 in the form of an upstanding bar is suitably secured to the horizontal supporting bar 16, for example by a pair of screws (not shown) extending upwardly from the underside of bar 16 through the slot 17 and threaded into the member 39. The rear end of the armature 36 is biased into engagement with the stop member 39 by the spring 38 to thereby define the retracted position of the armature. An adjustment screw 40 is threaded through an internally threaded horizontal bore in the stop member 39 and abuts an upstanding flange portion 41 formed on the carriage 30.

The armature 36 is moved axially forward against the bias of the spring 38 by energization of the solenoid coil 25, and the projected position of the armature is defined by abutment with the inner end of the sleeve bearing 34 of a shoulder (not shown) formed on the armature 36.

MS-1281

0119573

Adjustment of the projected position of the armature 36 can be effected by loosening the screws (not shown) threaded into the carriage member 30, turning the adjustment screw 40 to a new position, with corresponding movement of the carriage member 30 as necessary to maintain contact of the flange 41 with the screw 40, and then fixing the carriage member 30 in the new position of adjustment by means of the securing screws (not shown) aforementioned.

The retracted position of the solenoid armature 36 is defined by abutment of the rear end thereof with the adjustable stop member 39. Such retracted position can be adjusted by loosening the screws (not shown) anchoring the stop member 39 to the bar 16 and moving the member 39 in the selected direction along the supporting bar 16 toward or away from the solenoid 11, while at the same time turning the adjustment screw 40 as necessary to permit such movement. The stop member 39 is then reanchored to the bar 16 in its new position by means of the securing screws (not shown) aforementioned.

The adjustable mounting means 12 for the petri dish or other target member 13 comprises a pair of spaced parallel rail members 42 and 43 mounted on the base member 14. Slidably mounted on the rail members 42 and 43 for movement longitudinally thereof is a first carriage member 44. An upstanding boss 45 is formed on the upper surface of the base member 14 and is formed with an internally threaded horizontal bore 46, the axis of which is generally parallel to the rails 42 and 43 and to the path of movement of carriage 44. A lead screw 47, which may have a manually engageable knurled head 48 at its outer end is threaded through the bore 46 in boss 45. At its inner end the lead screw 47 is preferably rotatably anchored to the carriage 44 so that rotation of the screw 47 in one direction moves the carriage away from the boss 45, and rotation thereof

MS-1281

0119573

in the opposite direction moves the carriage 44 toward the boss 45.

The upper surface of the carriage 44 is formed with a transverse groove 49 which provides a slideway for a second carriage member 50 slidable therein in a horizontal direction normal to the direction of slidable movement of the carriage 44. Fixed on the carriage 44 at one end of the slideway 49 is an upstanding boss 52 which is formed with a horizontal internally threaded bore 52 having a lead screw 53 threaded therethrough. The lead screw 53 may be formed at its outer end with a manually engagable knurled head 54, and at its inner end is preferably rotatably anchored to the carriage 50. Thus, rotation of the screw 53 in one direction causes movement of the carriage 50 toward the boss 51, and rotation of the screw 53 in the opposite direction causes movement of the carriage 50 away from the boss 51. It is apparent that by rotation of the screw 47 the petri dish 13 is moved along one straight line horizontal path, and that by rotation of the screw 53, the petri dish 13 is moved along a coplanar second straight line horizontal path which is normal to the first-mentioned horizontal path.

Figure 3 illustrates in block diagram typical electrical circuitry for energization of the solenoid coil 35 and resultant forward or projectile movement of the armature 36 against the bias of the helical return spring 38. More particularly, the circuit in Figure 3 comprises a variable direct current voltage power supply 55, a variable frequency pulse generator 56, and a variable pulse width control 57. The velocity of the forward or projectile movement of the armature 36 is determined by the selected amplitude of the voltage and the selected width of the pulse with which the coil 35 is energized, whereas the velocity of the return or retractile movement of the armature 36 on deenergization

MS-1281

of the solenoid is a function of the bias of the return spring 38. In response to each energizing pulse, the armature 36 moves to its projected position against the bias of the spring 38, and upon termination of the energizing pulse, the spring 38 returns the armature to its retracted position. The variable frequency pulse generator 56 selectively provides for a single energizing pulse or a selected series of repetitive energizing pulses having a selected repetition rate.

Figure 4 illustrates on an enlarged scale the projected position to which the forward end of the armature 36 is moved in response to an energizing electrical pulse supplied to the coil 35. As the armature 36 moves in response to an energizing pulse from its retracted position shown in Figure 2 to its projected position shown in Figure 4, the velocity of its projectile movement is such that when its forward end strikes the adjacent wall portion of the tubular pump element leg 26 at the shock mode point illustrated, it cause impactual inward deformation thereof in an amount of about .002 to .003 inch, as illustrated in an exaggerated form in Figure 4. Upon cessation of the energizing pulse, the armature 36 is returned to its retracted position by the spring 38, and upon such return movement, the resiliency of the material from which the pump leg 26 is made returns the inwardly deformed wall portion to its normal unstressed condition, i.e., the inwardly deformed tubing wall portion returns to its normal cylindrical configuration.

In operation of the microdroplet dispenser, prior to clamping of the leg 26 of the pump element 10 between the clamp body member 19 and clamping member 22, the liquid to be dispensed is loaded into the pump element 10. This can be accomplished, for example, by inserting the tip of a pipette containing the liquid into the open end of the leg 27, and while holding the pump element 10 such that

MS-1281

0119573

the outlet orifice member 28 is slightly above the aforementioned end of the leg 27, discharging the contents of the pipette into the pump element, displacing the contained air without causing any air bubble inclusions in the entering liquid. An amount of liquid somewhat less than the total volume of the pump element 10 is introduced, for example 250 microliters of liquid, and the end of the leg 27 is then raised above the level of the outlet orifice member 28 to permit gravity to cause the liquid to flow to the outlet orifice 29. Capillary forces in the outlet orifice 29 prevent the liquid from flowing out of the orifice.

After loading with liquid, the pump element 10 is clamped in the operative or dispensing position thereof illustrated in Figures 1 and 2. In this position the end of the pump element leg 27 projects somewhat below the level of the outlet orifice member 28, and the shock mode point at which the axis of the solenoid plunger 36 intersects leg 26 is about .406 inch above the outer end of the orifice 29. The pump element 10 thus provides a chamber or receptacle for accomodation of the liquid to be dispensed, and it also provides a siphon-type connection between the liquid adjacent the outlet orifice member 28 and that within the leg 27, such that a slight negative pressure in the liquid is created at the outlet of orifice 29, and a negative meniscus is produced at said outlet.

In order to dispense a single microdroplet of liquid from the outlet orifice 29 of the pump element 10, the solenoid coil 35 may be energized with a single pulse of energy from the power supply 55, for example, a direct current pulse having an amplitude of 5 volts and a width of 16 milliseconds. This causes the armature 36 to be thrust toward the leg 26 of the pump element 10 to the

MS-1281

0119573

position thereof shown in Figure 4 which illustrates the resulting inward impactual deformation of the wall portion at the shock mode point shown. This impactual deformation produces a pressure pulse within the liquid in the pump element 10 at an empirically determined mode. The liquid displacement caused by this pressure pulse results in liqid flow toward the orifice 29, as well as in the opposite direction. Fluid flow impedance toward the orifice end is a function of the viscosity of the liquid, the orifice diameter, and the liquid mass inertia. Fluid flow impedance in the opposite direction is a function of the liquid viscosity, the tube diameter and the liquid mass inertia. The liquid flow toward the orifice 29 is effective to cause high velocity emission of single microdroplet of liquid from the orifice 29, and deposition thereof on a target member therebelow, for example on the surface of a layer of agar in the petri dish 13.

The diameter of the orifice 29 is the predominant factor affecting the size of the emitted microdroplet. The diameter of the emitted microdroplet approximates the diameter of the orifice 29 but is also influenced by other factors such as orifice wettability, liquid viscosity, temperature, internal pressure, and the rheological characteristics of the liquid. It has been calculated that for the apparatus thus far described, when the diameter of the orifice 29 is .0027 inch and the liquid being dispensed it water, the volume of the emitted microdroplet is $3 \times 10^{-9}$ liter, i.e., 3 billionths of a liter.

Figure 5 illustrates the formation and emission from the orifice 29 of a microdroplet. Views A through F illustrate the sequence of events observed by illuminating the orifice with a stroboscopic light and viewing the events with a steroscopic microscope. View A illustrates the system at rest, wherein liquid 66 has a concave meniscus

MS-1281

55 at the outer end of orifice 29, due at least in part to the negative internal pressure thereat aforementioned, the surface tension forces acting on the liquid at the meniscus preventing backflow. Upon impact of the solenoid plunger 36 with the tubular leg 26 of the pump member 10, the resultant impactual wall deformation and pressure pulse in the liquid causes projection of a microquantity stream of liquid 66 from the orifice 29 as shown in View B. The projected liquid stream is very unstable and necks, as shown at 67 in View C, due to surface tension, ultimately forming a free microdroplet 68 as shown in View D.

The energizing pulse is of short duration, and upon termination thereof the solenoid plunger 36 is returned to its retracted position, allowing the deformed wall portion of the leg 26 to return to its original cylindrical configuration. This causes the liquid 66 to be momentarily drawn back into the orifice 29 as shown in View E, while at the same time the free microdroplet 68 becomes more round due to surface tension forces, assuming a slightly elongated raindrop shape in free trajectory due to aerodynamic influence. Capillary attraction and meniscus surface tension at this point overcome the negative internal pressure, causing the liquid 66 to flow back down toward the outer end of the orifice 29 as shown in View F, replacing the microquantity of the droplet 68 emitted and thereby completing the microdroplet emitting cycle.

During any microdroplet dispensing cycle, any selected number of droplets can be dispensed. However, in the apparatus aforedescribed utilizing the Tygon® formulation R-3606 tubing, the maximum dispensing rate achieved was 35 microdroplets per second. The maximum dispensing rate is determined by the elastic recovery time of the tubing used in the pump element 10. By using in the pump element 10 less resilient materials having a more rapid elastic recovery

MS-1281

time, for example polyethylene, the microdroplet dispensing rate can be increased.

The apparatus thus far described is particularly well adapted for use in biochemical assay procedures. More particularly, the apparatus makes possible improved methods in which discreet surface portions of an agar medium or the like are inoculated with preselected micro quantities of liquid by deposition onto each of such surface portions the number of micro droplets of liquid required to provide the quantity thereof preselected for the respective surface portion. For example, a row or series of rectilinearly aligned discrete surface portions on an agar layer in the dish 13 can be separately inoculated by placing the first surface portion in the row underneath the outlet orifice 29 and dispensing the desired number of micro droplets of inoculant thereon. Assuming that the row of the surface portions is parallel with the axis of the lead screw 47, said screw is then rotated by an amount and in the direction required to move the next surface portion in the row underneath the outlet orifice 29. The desired number of micro droplets is then dispensed on the second surface portion, after which the screw 47 is again adjusted to bring the third surface portion under the outlet orifice 29. This procedure is continued until all of the surface portions in the row have been inoculated. By appropriate rotation of the lead screw 53, the petri dish 13 can be moved either to the left or to the right, as viewed in Figure 1, so that another row of rectilinearly aligned discrete surface portions whose alignment is parallel with that of the axis of the lead screw 47 can be inoculated by repeating the procedure described for the first series.

It will be obvious to one skilled in the art that the operation of the lead screws 47 and 53 can, if desired, be connected for operation by suitable drive means coordinated

MS-1281

with the energization of the solenoid coil 35 under computer control so that parallel rows of discrete surface portions of an agar medium in the dish 13 can be inoculated in a controlled manner on an x-y axis in accordance with the program of the controlling computer. Thus, the precise location and the amount of inoculant dispensed onto any particular discrete surface portion can be readily read out from the computer to facilitate analysis of the results of the inoculating method pursued.

It will be apparent that the pump element 10 is of such simple construction and low material cost that it readily can be a one time use, disposable item. In addition to being a disposable item, the pump element 10 could readily be marketed with a reagent, inoculant, or other liquid to be dispensed therefrom prepackaged therein, in which case suitable readily removable sealing means (not shown) would be provided for retention of the contained liquid within the pump element until it is about to be placed in operative position in the dispensing apparatus. At that time the removable sealing means is removed. After dispensing of the liquid from the element 10, it can be disposed of and replaced by another having the appropriate liquid therein.

Figures 6 and 7 illustrate a modified form of disposable pump element 10'. Figure 7 shows the element 10' in vertical section and mounted in operative position on the dispensing apparatus of Figures 1 and 2. The illustrated element 10' has a body which is generally rectangular in shape and has a cutaway portion defining a vertical edge surface 59 and a horizontal edge surface 60. The element 10' is also formed with a vertical reservoir 61 having a top opening 62 and with a vertical bore 63 communicating with the horizontal edge surface 60. Connecting the upper end of the bore 63 with the lower end of the reservoir 61 is a

MS-1281

generally U-shaped passageway or conduit 64. An extent of resilient deformable tubing 26' has its upper end telescopically sealed within the bore 63 and has press-fitted into its lower end a cylindrical outlet orifice member 28' having a coaxial bore or restricted outlet orifice 29'. The extent of tubing 26' and outlet orifice member 28' may be the same as the portion of the leg 26 and outlet orifice member 28 shown in Figure 4. The body of the pump element 10' may be molded of organoplastic material in two complementary halves, one half of which is shown in Figure 7. Such complementary halves are suitably joined together to form the single body unit of the pump element 10' shown in Figure 6.

In use of the pump element 10', the liquid to be dispensed is placed in the reservoir 61, and the element 10' is tipped to cause the liquid to flow to the orifice 29'. The element 10' is then placed in the operative or dispensing position wherein the tube 26' is clamped between the clamp body member 19 and the clampling member 22 as shown in Figure 7. The horizontal edge surface 60 provides shoulder means which overlies and cooperates with the upper surfaces of the clamp members 19 and 22 to define the vertical position of the lower end of the restricted outlet orifice 29' with respect to the axis of the solenoid plunger 36. This insures that each pump element 10', when placed in operative position, has the tube portion 26' thereof subject to impact by the solenoid plunger 36 at a shock mode point which is located at a predetermined distance from the lower end of the outlet orifice 29'. The pumping action of the pump element 10' and the dispensing of microdroplets of liquid from the outlet orifice 29' thereof are similar to those of the pump element 10.

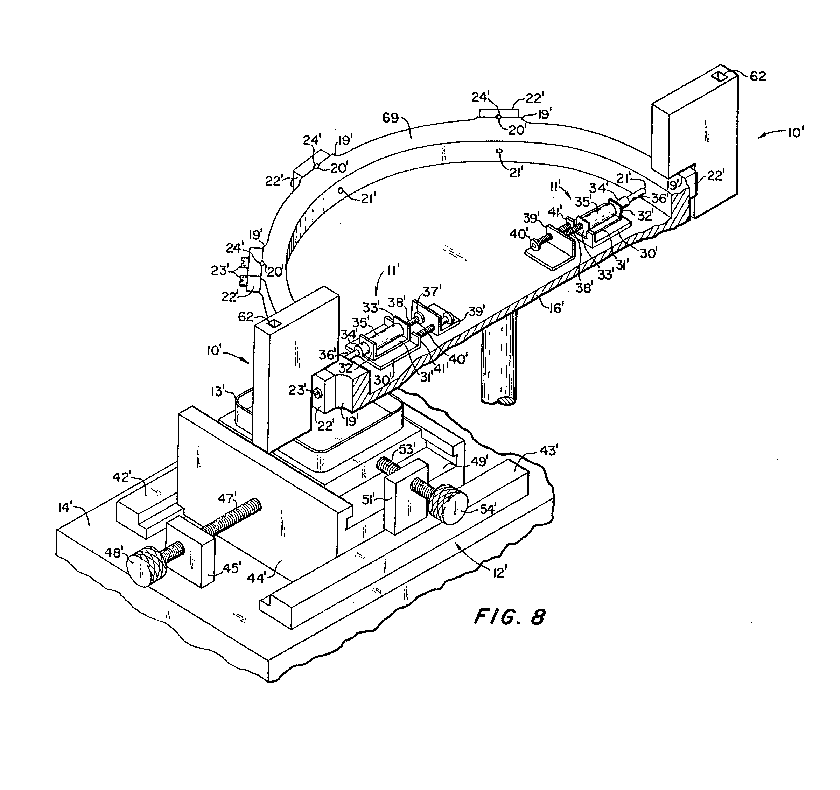

Figure 8 illustrates another embodiment of the micro-droplet dispenser of the present invention wherein parts

MS-1281

indicated by primed reference characters correspond to similar parts indicated by the same reference characters unprimed in previously referred to figures of the drawings. More particularly, the movable mounting means 12' for a petri dish or other target member 13' is the same as the movable mounting means 12 for the petri dish 13 in Figure 1. However, the horizontal supporting bar 16 of Figure 1 is replaced in Figure 8 by a rotatably mounted table 16' formed with an annular upstanding peripheral rim portion 69 which has formed thereon a plurality of spaced, radially outwardly projecting boss portions 19' corresponding to the clamp body member 19 of Figure 1, as well as a corresponding number of spaced, radial bores 21' therethrough. The bosses 19' are provided with a complementary clamping members 22', corresponding to the clamping member 22 in Figure 1, removably secured thereto by means of screws 23' which correspond to the screws 23 in Figure 1. It will be observed that the bosses 19' and clampling members 22 are formed with comple- , mentary semicylindrical grooves 20' and 24' corresponding to grooves 20 and 24 shown in Figures 1, 2, and 4. The disposable pump elements 10' shown in Figure 8 are the same as the pump element 10' shown in Figures 6 and 7, and are mounted on the table 16' in the same manner that the element 10' is mounted in Figure 7. It will be observed that the table 16' illustrated in Figure 8 is built to accommodate a plurality of pump elements 10'.

A pair of solenoid assemblies 11' are shown in Figure 8, and these correspond to the solenoid assembly 11 in Figure 1, differing therefrom in minor respects. While only two solenoid assemblies 11' are illustrated, it is understood that a separate solenoid assembly 11' may be employed at each boss 19' and cooperating clamping member 22', each set of the latter being adapted to clampingly mount a separate pump element 10' in operative position on table 16'.

It is apparent that with the form of the invention shown in Figure 8, a plurality of pump elements 10', which may contain the same or different inoculants or other liquids to be dispensed therefrom, can, by rotation of the table 16', selectively be brought into position for dispensing of microdroplets of liquid therefrom onto the petri dish or other target member 13' carried by the adjustable mounting 12'.

It will be understood by those skilled in the art that the operation of the form of the invention shown in Figure 8 can, if desired, be automated in the manner discussed with respect to the form of the invention shown in Figure 1. In such a case, suitable means would be provided for automatically rotating the table 16', and the program of the controlling computer would provide for indexing of the table 16' to bring the appropriate pump element 10' into position over the petri dish or other target member 13' for deposition on one or more specific discrete surface areas thereof of one or more microdroplets of inoculant or other liquids in accordance with the particular method being carried out pursuant to the computer program.

It is apparent that, by virtue of its ability to dispense controlled, preselected microquantities of liquid reagent, inoculant or specimen, the apparatus of the present invention makes possible the practice of a variety of biochemical assay procedures not possible heretofore. For example, a method can be practiced in which the same liquid is applied to a number of surface portions in a given row or series of surface portions on an agar medium contained in the petri dish, and the microquantity of such liquid applied to adjacent pairs of said surface portions can be the same or different. On the other hand, the method practiced may involve application to one surface portion in a given row of a liquid which is different from that applied to a next adjacent surface

MS-1281

0119573

portion, and which is applied in the same or a different microquantity. Similarly, the method practiced may involve application to one row of surface portions of a liquid which is the same as or different from that applied to the surface portions in a next adjacent spaced parallel row, and which is applied to a given surface portion in a microquantity which is the same as or different from that applied to a next adjacent surface portion in the same row or series.

In the presently preferred form of the invention, the means for actuating the pump element engaging member 36 of the pump actuating means is electroresponsive and more particularly electromagnetic. However, it is understood that the invention contemplates the use of other suitable forms of actuating means. For example the pump element engaging member can, if desired, be actuated by fluid pressure operated means, such as a pneumatic ram, or by electroacoustic means, such as a piezoelectric transducer.

0119573

CLAIMS

1.    A microdroplet dispenser useful in biochemical assay procedures, comprising a pump element, means for removably mounting said pump element in operative position, and pump actuating means, said pump element having a chamber portion adapted to contain liquid to be dispensed, a restricted outlet orifice communicating with said chamber, and a resilient deformable wall portion, said pump actuating means comprising a pump engaging portion movable from a retracted position to a projected position in which it causes inward deformation of the deformable wall portion of a pump element in said operative position, said pump actuating means being selectively actuable to cause movement of said pump engaging portion from its retracted to its projected position at a rate effective to cause impactual inward deformation of said pump element wall portion and resultant generation in liquid in said pump element chamber of a pressure pulse causing dispensing of a microdroplet of liquid from the outlet orifice.

2    The dispenser of Claim 1 wherein said pump actuating means comprises means for returning the pump engaging portion thereof to its retracted position after movement thereof to its projected position.

3.   The dispenser of Claim 1 wherein there is means for mounting a target member in a position to receive liquid dispensed from the outliet orifice of a pump element in said operative position and there is means providing for adjustment of the relative positions of the outlet orifice and traget member in a plane transverse to the direction in which liquid is dispensed from the outlet orifice.

MS-1281

- 20 -

0119573

4. The dispenser of Claim 1 wherein the mounting means for the lump element is carried by a movable support operable to move said pump element toward and away from said operative position and there is menas for mounting a target member in a position to receive liquid dispensed from the outlet orifice of a pump element in said operative position.

5. The dispenser of Claim 1 wherein the pump actuating means comprises means for returning the pump engaging portion thereof to its retracted position after movement thereof to its projected position, and there is means for causing repetitive operation of said lump actuating means to thereby cause dispensing of a succession of microdroplets from the outlet orifice in a given dispensing cycle.

6. A microdroplet dispenser useful in biochemical assay procedures, comprising a pump element containing liquid to be dispensed and having a downwardly directed restricted outlet orifice, actuating means for said pump element operable to cause the latter, when actuated by said actuating means, to dispense a microdroplet of the liquid from the orifice, means for mounting a petri dish or the like in a position to receive liquid dispensed from the outlet orifice, and means providing for adjustment in a horizontal direction of the relative positions of the outlet orifice and petri dish.

MS 1281

7.   The dispenser of Claim 6  wherein the actuating means comprises a cycling type electromagnetic operator and there is means including a source  of direct current, a variable frequency pulse generator and a variable pulse width control connected to said operator for selectively supplying the latter with a single or a predetermiend succession of energizing electrical pulses, in response to which a corresponding single or predetermined succession of microdroplets of liquid are dispensed onto the petri dish in a given position thereof relative to the outlet orifice.

8.   A disposable pump element for a microdroplet liquid dispenser useful in biochemical assay procedures, comprising a receptacle for liquid to be dispensed having a restricted outlet orifice and also having a resilient deformable wall portion, predetermined impactual inward deformation of said wall portion being effective to generate in liquid in said receptable a pressure pulse causing dispensing of a microdroplet of liquid from the outlet orifice.

9.   Process of applying predetermined microquantities of liquid to discrete surface portions of an agar medium or the like, comprising dispensing said liquid in microdroplet form onto said surface portions, the number of microdroplets of liquid dispensed onto a given surface portion being that required to provide the predetermined microquantity of said liquid for that surface portion.

10.   Process of claim 9 wherein the discrete surface portions are arranged in spaced relation in at least two spaced, rectilinear, generally parallel series, the same liquid is applied to the surface portions in another of said series, the microquantity of liquid applied to one surface  portion of a given series being the same as or different from that applied to a next adjacent surface portion in that series.

MS 1281

FIG. I

FIG. 2

FIG. 3

FIG. 4

FIG. 5

FIG. 6

FIG. 7

FIG. 8

0119573

European Patent
Office

**EUROPEAN SEARCH REPORT**

0119573
Application number

EP 84 10 2658

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | PATENTS ABSTRACTS OF JAPAN, vol. 6, no. 8(P-98)(886), 19th January 1982; & JP - A - 56 135 160 (HITACHI SEISAKUSHO K.K.) 22-10-1981<br>--- | 1,7,8 | C 12 M  1/26<br>B 01 L  3/02<br>G 01 N  1/00<br>G 01 F  11/08 |
| A | US-A-3 250 130 (F.M. LOZANO)<br>* Column 2, lines 31-41; column 3, line 48 - column 5, line 20; figures 1,5 *<br>--- | 1,7,8 | |
| A | FR-A-2 299 625 (EASTMAN KODAK COMPANY)<br>* Page 20, lines 1-39; figure 1 *<br>--- | 1 | |
| A | DE-A-2 037 427 (NATIONAL RESEARCH DEVELOPMENT)<br>* Page 16 * | 3 | |
| | | | **TECHNICAL FIELDS SEARCHED (Int. Cl. ³)** |
| | ----- | | C 12 M  1/00<br>G 01 N  1/00<br>B 01 L  3/00<br>B 01 L  11/00<br>G 01 F  11/00 |

The present search report has been drawn up for all claims

| Place of search | Date of completion of the search | Examiner |
|---|---|---|
| THE HAGUE | 16-06-1984 | ANTHONY R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82